# EUROPEAN PATENT APPLICATION

(11) **EP 2 631 728 A2**
(43) Date of publication of application: **28.08.2013**
(21) Application number: 13155696.1
(22) Date of filing: 18.02.2013
(51) Int. Cl.: G05D 1/00

(54) **Methods and apparatus for dynamically simulating a remote audiovisual environment**

(30) Priority: 27.02.2012 US 201213406212
(71) Applicant: Honeywell International Inc., Morristown, NJ 07962-2245 (US)
(72) Inventor: O'Brien, Patrick, Morristown, NJ 07962-2245 (US)
(74) Representative: Houghton, Mark Phillip

(57) **Abstract**

Methods and apparatus are provided for transmitting sensory data over a bidirectional data link to reproduce an audiovisual environment for a physically displaced operator. The apparatus includes a stationary or mobile surveillance platform equipped with transducers for capturing local sensory information including audio, visual, haptic, thermal, and other metrics associated with human perception. The sensory data is processed, transmitted over the data link, and displayed to the operator to simulate a virtual presence. The system further includes ergonomic sensors for detecting head, body, limb, and/or eye related operator motion to allow the operator to remotely manipulate the sensory transducers to selectively configure the field of perception within the measured environment.

## Description

### TECHNICAL FIELD

The present invention generally relates to remotely operated vehicles (ROV), and more particularly relates to transmitting acoustic and video signals over a data link to present the operator with a remote virtual presence which approximates the ROV environment.

### BACKGROUND

Remotely operated vehicles (ROV) allow dull, dangerous, and dirty operations to be carried out while maintaining a safe environment for the vehicle operator(s). Unmanned vehicles and stationary command posts are increasingly used for surveillance, employing payload sensors such as cameras and microphones (fixed or gimbaled).

While operating the vehicle, particularly when the vehicle is not visible to the operator, the operator is expected to simultaneously navigate the vehicle and survey the local vehicle environment. These competing objectives mutually constrain both navigation and surveillance functions. Moreover, the field of view of most cameras is limited relative to the human eye. Thus, the use of remote cameras and microphones limits the operator's ability to take advantage of the natural broad field of view, scanning via head and eye movement, and the peripheral vision associated with human eyesight.

The inability to fully exploit human sensory capabilities further diminishes the situational awareness resulting from the integration of visual, auditory, and other senses, such as auditory cueing to assist in resolving issues pertaining to spatial location and orientation. In addition, other personnel (e.g., surveillance analysts, commanders) may have a need for visual and auditory information local to the ROV, including information outside the field of view or field of regard of the cameras and microphones.

Accordingly, it is desirable to provide ROV and other surveillance, reconnaissance, ant tactical systems which overcome the foregoing limitations. Furthermore, other desirable features and characteristics of the present invention will become apparent from the subsequent detailed description of the invention and the appended claims, taken in conjunction with the accompanying drawings and this background of the invention.

### BRIEF SUMMARY

Systems and methods are provided for remotely controlling surveillance equipment and platforms. An exemplary system includes a surveillance platform including a first camera having a first field of view, a second camera having a second field of view, and a first microphone. The system further includes a headset physically displaced from the surveillance platform, including a primary display and a first speaker.

In an embodiment, the system is configured to transmit audio data from the first microphone to the first speaker. The system is further configured to transmit image data from the first camera to the primary display when the headset is in a first position, and transmit image data from the second camera to the primary display when the headset is in a second position. In this way, when an operator turns his head to the left, the display located in front of the operator's eyes, i.e., the display in the center of the headset, transitions from the field of view in front of the vehicle to the field of view to the left of the vehicle.

The surveillance platform may be a remotely operated vehicle (ROV) or a stationary platform, such as a fixed command post. The surveillance platform may be an enclosed structure such as a tank or armored vehicle, an aircraft, or a marine or submarine vehicle with the camera mounted on the outside of the structure, and the operator headset disposed inside the structure.

The system further includes a bidirectional data link, with the image data and audio data being transmitted over the data link. The data link may be a wired or a wireless communication link.

The system further includes a tracking module configured to detect the first and said second headset positions, and the tracking module may be integrated into the headset. In an embodiment, the headset is configured to be worn by a human operator, and the tracking module is configured to track the movement (motion) and/or position of the operator's head.

In an embodiment the headset further comprises a first peripheral display, wherein the first field of view is viewable on the primary display and the second field of view is viewable on the first peripheral display when the headset is in the first position (i.e., looking forward), and the second field of view is viewable on the primary display when the headset is in the second position (i.e., looking to the left).

In a further embodiment of the system, the surveillance platform includes a third camera having a third field of view and the headset has a second peripheral display, wherein the first field of view (e.g., straight ahead of the ROV) is viewable on the primary display (in front of the operator's eyes), the second field of view (e.g., the view to the left of the ROV) is viewable on the first peripheral display (corresponding to the operator's left peripheral vision), and the third field of view (e.g., the view to the right of the ROV) is viewable on the second peripheral display (the operator's right peripheral vision) when the headset is in the first position (e.g., looking forward).

When the headset is in the second position (e.g., when the operator turns his head to the left), the second field of view (e.g., looking left from the ROV) is viewable on the primary display and the first field of view (e.g., in front of the ROV) is viewable on the second peripheral display (e.g., the operator's right peripheral vision), simulating a virtual perspective from within a "glass" ROV when turning one's head and transitioning from looking forward to looking to the left.

Similarly, when the operator looks to the right the headset assumes a third position, wherein the third field of view (e.g., looking to the right from within the ROV) can be seen on the primary display and the first field of view (in front of the ROV) is viewable on the first peripheral display (corresponding to the operator's left peripheral vision).

In a further embodiment the surveillance platform includes a second microphone and the headset includes a second speaker, wherein the first speaker is disposed proximate the operator's left ear and the second speaker is disposed proximate the operator's right ear. Also in an embodiment, the first peripheral display is disposed left of the operator's left eye, and the second peripheral display is disposed to the right of the operator's right eye.

In a further embodiment the system is configured to transmit audio signals from the first and second microphones to the first and second speakers, respectively, over a data link which interconnects the surveillance platform and the headset. In one embodiment, the first and second speakers implement a dynamic virtual auditory display (DVAD), and tracking module is an accelerometer.

In accordance with another embodiment, the system further includes an auxiliary station having an auxiliary display, an auxiliary speaker, and an auxiliary field of view (FOV) controller (e.g., a joy stick) having a first control position and a second control position, with a bidirectional data link connecting the surveillance platform with both the headset and the auxiliary station. In various embodiments the system may be configured such that the first field of view is viewable on the auxiliary display when the FOV controller is in the first position, and the second field of view is viewable on the auxiliary display when the FOV controller is in the second position.

A method is provided for manipulating the field of view of a surveillance system of the type including: 1) a remote operated vehicle (ROV) having a forward camera having a forward field of view, a left camera having a left field of view, a right camera having a right field of view, a left microphone having a left field of regard, and a right microphone having a right field of regard; 2) a remote headset with a left speaker presenting the left field of regard, a right speaker presenting the right field of regard, a front display in the center of the headset, a left display disposed to the left of the front display, a right display disposed to the right of the front display, and a tracking module; and 3) a bidirectional wireless link interconnecting the ROV and the headset.

The method includes detecting, using the tracking module, when the headset is in a forward orientation, a leftward orientation, and a rightward orientation, and presenting the forward field of view on the forward display, the left field of view on the left display, and the right field of view on the right display when the headset is in the forward orientation. The method further includes presenting the left field of view on the forward display and the forward field of view on the right display when the headset is pointed to the left (the leftward orientation), and presenting the right field of view on the forward display and the forward field of view on the left display when the headset is moved or repositioned to the right (the rightward orientation).

The method further involves, in an embodiment, stitching together at least a portion of the first field of view and at least a portion of the left field of view into a composite video image and presenting a portion of the composite video image on the front display as the headset moves leftward from the forward position.

A system for dynamically reproducing a remote audiovisual surveillance environment is also provided. The system includes an unmanned airborne remotely operated vehicle (ROV), a plurality of video cameras (each having a respective field of view) mounted to the ROV and configured to output a corresponding plurality of video streams, a first microphone mounted on one side of the ROV and configured to output a first audio signal, and a second microphone mounted on the other side of the ROV and configured to output a second audio signal.

The system further includes a primary node (located remotely from the ROV) including a primary display, a primary field of view (FOV) controller, and a primary speaker. An auxiliary node may also be located remotely from the ROV, and includes an auxiliary display, an auxiliary FOV controller, and an auxiliary speaker. A bidirectional wireless data link is configured to transmit the video streams and the first and second audio signals from the ROV to both the primary node and the auxiliary node. A control system is configured to present a first subset of the video streams on the primary display and one (or both) of the first and second audio signals to the first speaker in accordance with (i.e., as a function of) the first FOV controller, and to present a second video stream subset on the auxiliary display and at least one of the first and second audio signals to the second speaker in accordance with the second FOV controller.

### BRIEF DESCRIPTION OF THE DRAWINGS

The present invention will hereinafter be described in conjunction with the following drawing figures, wherein like numerals denote like elements, and

FIG. 1 is a conceptual layout diagram of an exemplary remotely operated vehicle (ROV) control system in accordance with the subject matter described herein;

FIG. 2A is a conceptual layout diagram of a plurality of displays mounted in an exemplary headset, looking forward from the operator's perspective in the context of the ROV control system of FIG. 1;

FIG. 2B is a conceptual layout diagram of a plurality of displays mounted in an exemplary headset, looking to the left from the operator's perspective in the context of the ROV control system of FIG. 1;

FIG. 3 is a schematic block diagram illustrating various functional modules of a remote controlled surveillance system in accordance with the present disclosure; and

FIG. 4 is a flow chart diagram of a method of manipulating the field of view of a surveillance system in accordance with the present disclosure.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Those of skill in the art will appreciate that the various illustrative logical blocks, modules, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions.

To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein.

A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

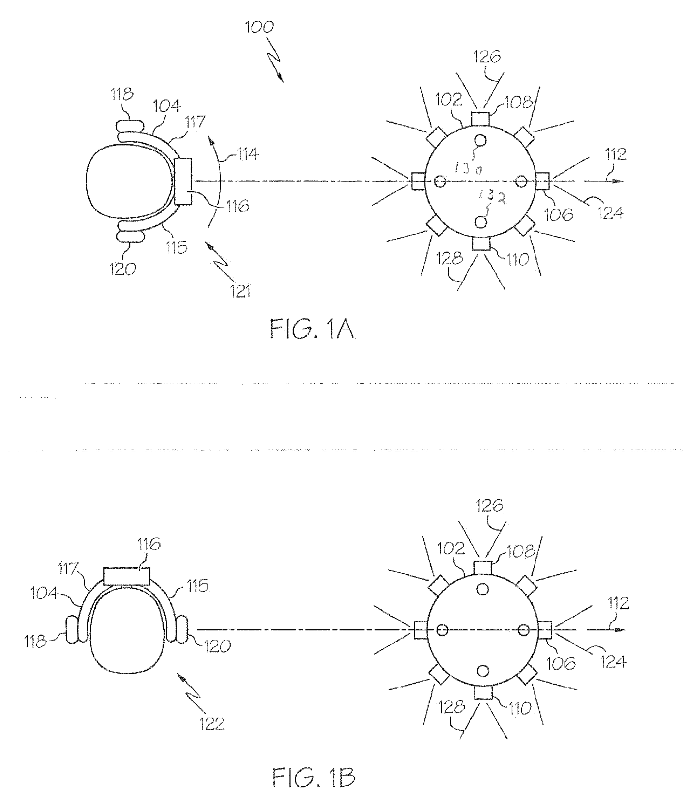

Referring now to FIG. 1, a system 100 for dynamically reproducing a remote audiovisual environment includes a remotely operated vehicle (ROV) 102 and a headset 104 physically displaced from the ROV. ROV 102 is shown oriented in the forward direction (indicated by the arrow 112). A first camera 106 has an associated field of view 124 in the forward direction. A second camera 108 has a field of view 126 which is oriented to the left with respect to the forward direction (arrow 112). A third camera 110 has a field of view 128 oriented to the right with respect to arrow 112. As illustrated, first camera 106 is mounted to the front of ROV 102, second camera 108 is mounted to a first side of ROV 102, and third camera 110 is mounted to the opposite side of ROV 102.

Respective first and second microphones 130 and 132 are mounted on opposing sides of ROV 102. Each microphone has a "field of regard", or a zone within which acoustic information is captured. The precise geometry of the field of regard will be determined by the orientation and hardware configuration of the microphone assemblies. For the purposes of this disclosure, it is sufficient that each microphone has an associated field of regard which is in part determined by the location of the microphone on ROV 102. It will be appreciated that any number and configuration of cameras, microphones, and other sensors may be employed for gathering data from the local environment surrounding ROV 102.

Headset 104 may be in the form of a helmet, visor, earmuffs, a halo brace, or any other configuration which presents one or more visual and audio displays to the operator, and which facilitates tracking of operator movement such as, for example, movement of the operator's head, eyes, limbs, hands, foot, fingers, neck, or any other body part or physiological or sensory parameter (including but not limited to voice, respiration, and the like). For this purpose, one or more tracking modules 117, for example, an accelerometer, may be incorporated into or otherwise associated with headset 104.

In the illustrated embodiment, headset 104 includes a visor module 116 and a template assembly 115 for removably securing visor module 116 to the operator's head. Headset 104 further includes a first speaker 118 proximate the operator's left ear, and a second speaker 120 proximate the operator's right ear. One or both of speakers 118, 120 may comprise a single source acoustic driver (magnet), or a speaker assembly such as, for example, a dynamic virtual auditory display (DVAD) device.

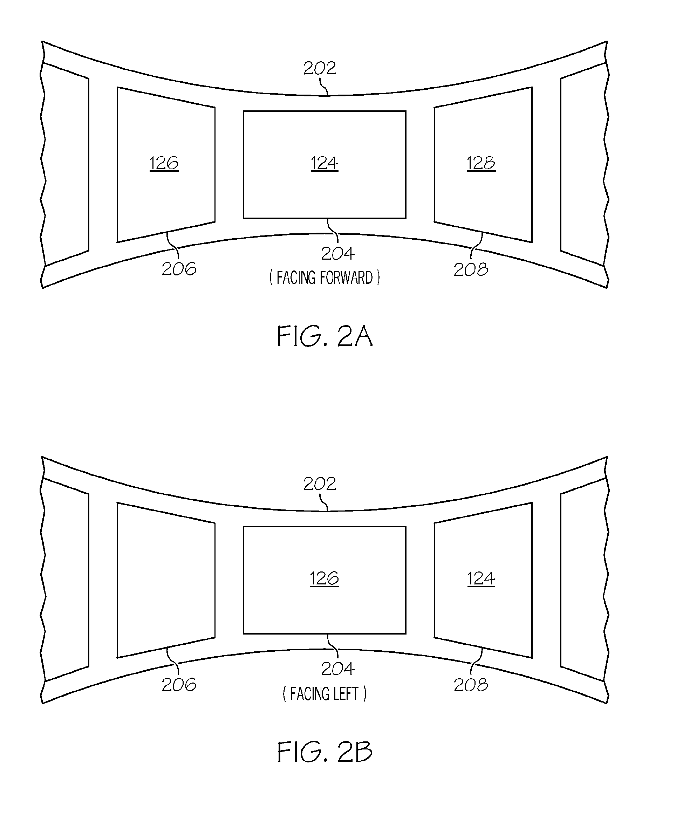

FIG. 1 illustrates a first orientation 121 of an operator facing in a forward direction (along arrow 112), and a second orientation 122 in which the operator has turned his head to the left with respect to arrow 112. As described in greater detail below, FIG. 2A represents the operator's view of the inside of visor module 116 when the operator is facing forward (orientation 121 in FIG. 1). FIG 2B represents the operator's view when the operator turns his head to the left as shown by arrow 114 (orientation 122 in FIG. 1). The hardware associated with headset 104 does not move relative the operator's head. However, the video image presented to the operator does change as a function of head motion; that is, a different camera field of view or a combination or composite (e.g., stitching) of different fields of view is presented to the operator as a dynamic function of the output of tracker module 117.

With continued reference to FIG. 2, visor module 116 includes a primary internal display 124 located in the center (e.g., between and in front of the operator's eyes), one or more first peripheral displays 126 disposed to the left of primary display 124, and one or more second peripheral displays 128 located to the right of primary display 124. When headset 104 is in a first position, for example, orientation 121, the operator's forward looking vector is generally parallel to the forward looking vector associated with ROV 102, i.e., along arrow 112. In the case, field of view 124 associated with camera 106 is presented to the operator on primary display 124.

In this orientation, field of view 126 (camera 108) is presented on first peripheral display 126, and field of view 128 (corresponding to camera 110) is presented on second peripheral display 128. In addition, an acoustic signal from microphone 130 is presented to speaker 118, and an acoustic signal from microphone 132 is presented to speaker 120.

In this way, the operator is presented with a remote "virtual presence", simulating or approximating the forward and peripheral vision, as well as the acoustic orientation, that the operator would experience from the perspective of ROV 102 looking forward along arrow 112. Significantly, coordinating the audio and the visual dimensions of the sensory experience allows integration of the two sensory dimensions.

By way of non-limiting example, suppose the operator is in orientation 121 (looking forward) and a sound is presented in left speaker 118. This corresponds to an audio cue, suggesting that the operator should look to the left side of the ROV. When the operator's head turns to the left (arrow 114), headset 104 transitions to orientation 122 in FIG. 1. Tracking module 117 detects this movement (change in head position) and, in response, the system manipulates the video image(s) presented to the operator.

More particularly, FIG. 2B illustrates the operator's view associated with orientation 122. In this position, field of view 126 (camera 108) is presented on primary display 204, and field of view 124 (camera 106) is presented on peripheral display 208. It will be appreciated that any number and configuration of cameras, microphones, displays and other sensors may be employed to reproduce or simulate a virtual presence, allowing the operator to effectively experience the local environment of ROV 102 remotely from headset 104.

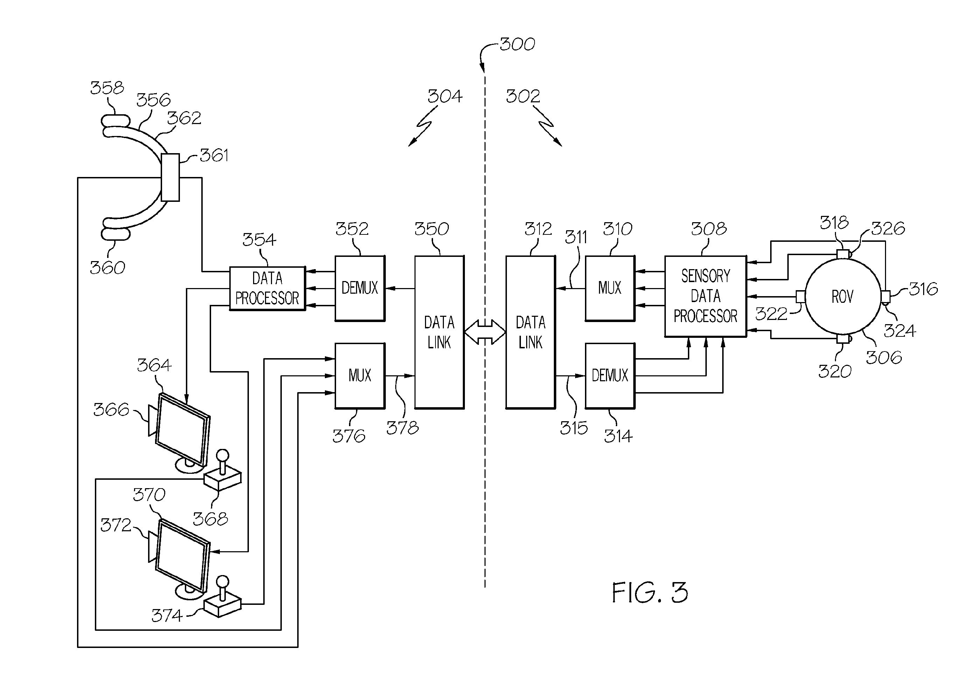

FIG. 3 is a block diagram of a remotely controlled surveillance system 300 including a surveillance platform 302 and a remote control system 304. Platform 302 includes an ROV 306 having respective cameras 316, 318, 320, and 322, as well as respective microphones 322, 324, and 326 mounted to the platform. Platform 302 further includes a data processing module 308, a multiplexor module 310, a demultiplexor module 314, and a data link 312.

The various cameras, microphones, and/or other sensors (not shown) associated with ROV 306 are configured to feed raw sensory data (e.g., video and audio signals) to processor module 308. Processor module 308 process the raw data. Processing may include selecting which sensor data to process, stabilization (e.g., image stabilization), image stitching, data compression, image and/or audio enhancement, and filtering. The processed data is then applied to multiplexor module 310, and a multiplexed signal 311 is applied to data link 312. The multiplexed data may then be transmitted to remote control system 304, either wirelessly or via a hardware tether (not shown).

With continued reference to FIG. 3, remote control system 304 includes a data link 350, a demultiplexor module 352, a data processing module 354, a multiplexor module 376, a headset 356, and first and second auxiliary display units 364 and 370. Data link 350 and data link 312 cooperate to form a bidirectional data link for sending and receiving data back and forth between surveillance platform 302 and control system 304.

The data received by data link 350 is applied to demultiplexor module 352. The resulting demultiplexed signals are applied to data processor module 354 and converted into individual data streams (e.g., audio and video signals). The individual data streams are selectively applied to various operator viewing and playback devices, discussed below.

More particularly, headset 356 includes a left speaker 358, a right speaker 360, a visor module 361 including one or more video displays (not shown), and a tracking module 362, also referred to as a field of view (FOV) controller. First auxiliary display 364 includes a speaker 366 and a FOV controller 368; auxiliary display 370 includes a speaker 372 and an FOV controller 374.

In a preferred embodiment, tracking module 362 and FOV controllers 368 and 374 all operate independently. That is, they can each select a desired orientation or viewing perspective from ROV 302. Specifically, respective control signals from tracking module 362, FOV 368, and FOV 374 are applied to multiplexor module 376. The resulting multiplexed signal 378 is applied to data link 350 and transmitted to data link 312. The corresponding control signal 315 is demultiplexed by demultiplexor module 314, and the demultiplexed signals are applied to processing module 308. Based on these control signals, module 308 selects the appropriate data streams (in particular, camera fields of view) to be transmitted back the requesting FOV controller.

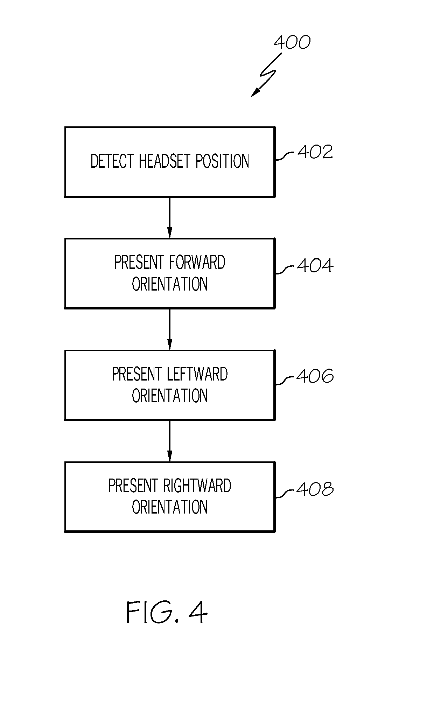

FIG. 4 is a flow chart diagram of an exemplary method 400 for manipulating the field of view of a surveillance system in accordance with the present disclosure. The method may be implemented in the context of a surveillance system of the type including: 1) a remote operated vehicle (ROV) having a forward camera having a forward field of view, a left camera having a left field of view, a right camera having a right field of view, a left microphone having a left field of regard, and a right microphone having a right field of regard; 2) a headset disposed remotely from said ROV and having a left speaker configured to present said left field of regard, a right speaker configured to present said right field of regard, a front display disposed near the center of said headset, a left display disposed to the left of said front display, a right display disposed to the right of said front display, and a tracking module; and 3) a bidirectional wireless link connecting said ROV and said headset.

The method includes detecting (task 402) the motion and/or position of the tracking module, i.e., detecting whether the headset is in a forward orientation, a leftward orientation, or a rightward orientation. The method further includes presenting (task 404) the forward field of view on the forward display, the left field of view on the left display, and the right field of view on the right display when said headset is in the forward orientation, and presenting (task 406) the left field of view on the forward display and the forward field of view on the right display when the headset is in the leftward orientation.

The method further involves presenting (task 408) the right field of view on the forward display and the forward field of view on the left display when the headset is in the rightward orientation.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A remotely controlled surveillance system, comprising:
a surveillance platform including a first camera having a first field of view, a second camera having a second field of view, and a first microphone; and
a headset physically displaced from said surveillance platform and including a primary display and a first speaker;
wherein said system is configured to:
transmit audio data from said first microphone to said first speaker;
transmit image data from said first camera to said primary display when said headset is in a first position; and
transmit image data from said second camera to said primary display when said headset is in a second position.

2. The system of claim 1, wherein said surveillance platform comprises a remotely operated vehicle (ROV).

3. The system of claim 1, wherein said surveillance platform comprises a stationary command post.

4. The system of claim 1, wherein said surveillance platform comprises an enclosed structure, said first and second cameras are mounted on the outside of said structure, and said headset is disposed inside said structure.

5. The system of claim 1, further comprising a bidirectional data link, and said image data and said audio data are transmitted over said data link.

6. The system of claim 5, wherein said data link comprises a wireless communication link.

7. The system of claim 5, further comprising a tracking module configured to detect said first and said second headset positions.

8. The system of claim 7, wherein said tracking module is integrated into said headset, said headset is configured to be worn by a human operator, and said tracking module is configured to track at least one of the motion and position of the operator's head.

9. A method of manipulating the field of view of a surveillance system of the type including: 1) a remote operated vehicle (ROV) having a forward camera having a forward field of view, a left camera having a left field of view, a right camera having a right field of view, a left microphone having a left field of regard, and a right microphone having a right field of regard; 2) a headset disposed remotely from said ROV and having a left speaker configured to present said left field of regard, a right speaker configured to present said right field of regard, a front display disposed near the center of said headset, a left display disposed to the left of said front display, a right display disposed to the right of said front display, and a tracking module; and 3) a bidirectional wireless link connecting said ROV and said headset, the method comprising:
detecting, using said tracking module, when said headset is in a forward orientation, a leftward orientation, and a rightward orientation;
presenting said forward field of view on said forward display, said left field of view on said left display, and said right field of view on said right display when said headset is in said forward orientation;
presenting said left field of view on said forward display and said forward field of view on said right display when said headset is in said leftward orientation; and
presenting said right field of view on said forward display and said forward field of view on said left display when said headset is in said rightward orientation.

10. The method of claim 9, further comprising stitching together at least a portion of said first field of view and at least a portion of said left field of view into a composite video image and presenting a portion of said composite video image on said front display as said headset moves leftward from said forward orientation.
